# EUROPEAN PATENT APPLICATION

(11) **EP 2 530 358 A1**
(43) Date of publication of application: **05.12.2012**
(21) Application number: 10844579.2
(22) Date of filing: 28.01.2010
(51) Int. Cl.: F16H 9/18, F01N 5/00, F16H 61/02

(54) **POWER TRANSMISSION DEVICE CONTROLLER**

(71) Applicant: Toyota Jidosha Kabushiki Kaisha, Toyota-shi, Aichi 471-8571 (JP)
(72) Inventor: SAITO, Tatsuya, Toyota-shi Aichi 471-8571 (JP); SANO, Toshinari, Toyota-shi Aichi 471-8571 (JP); YOSHIDA, Michio, Toyota-shi Aichi 471-8571 (JP); IJICHI, Akira, Toyota-shi Aichi 471-8571 (JP)
(74) Representative: Intès, Didier Gérard André
(86) International application number: PCT/JP2010/051131
(87) International publication number: WO 2011/092816

(57) **Abstract**

A control system for a power transmission unit capable of utilizing pressure of exhaust gas generated by an internal combustion engine.

The control system for a power transmission unit according to the present invention comprises: a power transmission unit to which a power is inputted; a movable member arranged in a movable manner to control a power transmitting condition of the power transmission unit; and a pressure chamber to which a pressure is transmitted to generate a force to move the movable member; an internal combustion engine 2, which is adapted to output power by converting thermal energy resulting from burning fuel into kinetic energy; and a pressure transmission mechanism 22A, which is adapted to transmit a pressure of exhaust gas resulting from burning the fuel in the internal combustion engine 2 to the pressure chamber 18.

## Description

### TECHNICAL FIELD

thins invention relates to a control system for controlling a power transmitting condition of a power transmission unit, and more specifically, to a control system for controlling the power transmitting condition of a power transmission unit by changing a pressure to be applied to the power transmission unit.

### BACKGROUND ART

One example of a vehicle, in which a power transmitting condition of a power transmission unit is controlled by controlling a movement of a movable member by a fluid pressure, is disclosed by Japanese Patent Laid-Open No. 11-2316. According to the vehicle taught by Japanese Patent Laid-Open No. 11-2316, torque outputted from an engine is transmitted to a drive wheel while being increased and reduced by a transmission. The engine used in the vehicle taught by Japanese Patent Laid-Open No. 11-2316 is a conventional internal combustion engine, which is adapted to generate mechanical power by burning air-fuel mixture regulated by a throttle valve in a cylinder. Therefore, high pressured exhaust gas is generated as a result of burning the fuel, and the exhaust gas thus generated is emitted to the atmosphere through an exhaust pipe.

According to the teachings of Japanese Patent Laid-Open No. 11-2316, the transmission comprises a drive shaft and a driven shaft arranged parallel to each other. The drive shaft is connected with a crank shaft of the engine, and provided with a drive pulley rotated integrally therewith. The drive pulley comprises a first movable sheave capable of moving in an axial direction, and a first fixed sheave incapable of moving in the axial direction. Therefore, a first groove is defined between those first movable sheave and first fixed sheave. In addition, a backup plate is fixed to the drive shaft, and a spherical weight is interposed between the first movable sheave and the backup plate. The wight is allowed to move in a radial direction of the drive shaft. Therefore, the weight is moved radially outwardly when a centrifugal force is applied thereto.

The transmission taught by Japanese Patent Laid-Open No. 11-2316 further comprises a driven pulley rotated integrally with the driven shaft. Specifically, the driven pulley comprises a second movable sheave capable of moving in an axial direction, and a second fixed sheave incapable of moving in the axial direction. Therefore, a second groove is defined between those second movable sheave and second fixed sheave. The second movable sheave is provided with a spring for pushing the second movable sheave toward the second fixed sheave. In addition, a vacuum chamber is formed in the drive pulley. The vacuum chamber is communicated with an intake passage of the engine at a downstream side of a throttle valve of the intake passage. Therefore, a negative pressure in the intake passage is introduced to the vacuum chamber. Further, a V-belt is applied to the drive pulley and the driven pulley thus structured.

According to the transmission taught by Japanese Patent Laid-Open No. 11-2316, in case the drive shaft is rotated at a relatively low speed by the power of the engine transmitted thereto, a pushing force of the spring pushing the second movable sheave is greater than a force pushing the first movable sheave by the weight being moved outwardly by the centrifugal force. Consequently, a width of the second groove of the driven pulley is narrowed, and a width of the first groove of the drive pulley is widened. As a result, a running radius of the V-belt on the drive pulley is reduced relatively, and a speed change ratio of the transmission becomes relatively large ratio. To the contrary, in case the drive shaft is rotated at a relatively high speed, the force pushing the first movable sheave by the weight being moved outwardly by the centrifugal force is greater than the pushing force of the spring pushing the second movable sheave. Consequently, the width of the first groove of the drive pulley is narrowed, and the width of the second groove of the driven pulley is widened. As a result, a running radius of the V-belt on the drive pulley is enlarged relatively, and a speed change ratio of the transmission becomes relatively small ratio.

According to the vehicle taught by Japanese Patent Laid-Open No. 11-2316, in case the rider fully closes the throttle valve of the engine thereby decelerating the vehicle, an engine braking force is established. In this situation, the negative pressure in the intake passage is introduced to the vacuum chamber. Consequently, the weight is moved radially inwardly by the negative pressure against the centrifugal force, and the force pushing first movable sheave of the drive pulley toward the first fixed sheave is thereby reduced. As a result, the spring force pushing the second movable sheave exceeds the force pushing the first movable sheave by the weight. Therefore, the width of the second groove of the driven pulley is narrowed, and the width of the first groove of the drive pulley is widened. Consequently, the running radius of the V-belt on the drive pulley is decreased relatively, and the speed change ratio of the transmission is thereby increased. As a result, strong engine braking force is established.

In addition, a hydraulic controller for a transmission of a vehicle is disclosed in Japanese Patent Laid-Open No. 61-228149, a device for controlling a belt-type continuously variable transmission is disclosed in Japanese Patent Laid-Open No. 62-127550, and an example of a hydraulic piston arrangement comprising a hydraulic chamber filled with working fluid is disclosed in Japanese Patent Laid-Open No. 8-284905. Further, in addition to the above-listed patent documents, a gas energy conversion mechanism disclosed in Japanese Patent Laid-Open No. 2005-9504, and an energy recovery device disclosed in Japanese Patent Laid-Open No. 2007-85440 are configured to utilize fluid energy.

According to the vehicle taught by Japanese Patent Laid-Open No. 11-2316, the weight moved by the centrifugal force cannot be moved in the detection to reduce the speed in case the vehicle is being decelerated. Therefore, according to the teachings of Japanese Patent Laid-Open No. 11-2316. the speed change ratio of the transmission is increased by introducing the negative pressure in the intake passage of the engine to the vacuum chamber of the transmission when decelerating the vehicle. That is, the negative pressure in the intake passage of the engine is utilized to enhance the engine braking force when decelerating the vehicle. However, According to the vehicle, taught by Japanese Patent Laid-Open No. 11-2316, the exhaust gas resulting from burning the fuel is emitted to the atmosphere through the exhaust pipe of the vehicle. Thus, according to the prior art, energy of the exhaust gas, especially, pressure of the exhaust gas has not been utilized. Therefore, it is necessary to utilize the energy of the exhaust gas effectively.

### DISCLOSURE OF THE INVENTION

The present invention has been conceived noting the technical problems thus far described, and its object is to provide a control system for a power transmission unit, which is capable of improving energy efficiency utilizing pressure of exhaust gas resulting from burning fuel in an internal combustion engine.

In order to achieve the above-mentioned object, according to the present invention, there is provided a control system for a power transmission unit, which has a power transmission unit to which a power is inputted, a movable member arranged in a movable manner to control a power transmitting condition of the power transmission unit, and a pressure chamber to which a pressure is transmitted to generate a force to be applied to the movable member, characterized by comprising: an internal combustion engine, which is adapted to output power by converting thermal energy resulting from burning fuel into kinetic energy; and a pressure transmission mechanism, which is adapted to transmit a pressure of exhaust gas resulting from burning the fuel in the internal combustion engine to the pressure chamber.

Specifically, the pressure transmission mechanism comprises a pressure control valve which controls the pressure of the exhaust gas transmitted to the pressure chamber.

In addition, the pressure transmission mechanism further comprises: a first conduit arranged in a relatively upstream side in a flowing direction of the exhaust gas; a second conduit arranged in a downstream side of the first conduit in the flowing direction of the exhaust gas; a pressure reducing mechanism, which is arranged between the first conduit and the second conduit, and which is configured to reduce the pressure in the second conduit to be lower than that in the first conduit: a third conduit, which connects the first conduit and the second conduit while bypassing the pressure reducing mechanisms, and to which the exhaust gas is inflown by a pressure difference between the first conduit and the second conduit; and a pressure control valve, which is arranged in the third conduit, and which controls the pressure of the exhaust gas flowing into the third conduit from the first conduit. According to the present invention, the pressure of the exhaust gas thus controlled by the pressure control valve is transmitted to the pressure chamber.

According to the present invention, a power outputted from the internal combustion engine is inputted to the power transmission unit.

In addition, According to the present invention, a purifying catalyst to purify the exhaust gas emitted from the internal combustion engine is arranged on a flowing route of the exhaust gas, and the pressure transmission mechanism is arranged between the internal combustion engine and the purifying catalyst on the flowing route of the exhaust gas.

According to the present invention, the control system for a power transmission unit further comprises a pressure conversion mechanism, which is configured to transmit the pressure of the exhaust gas from the pressure transmission mechanism to the pressure chamber, while converting the pressure of the exhaust gas into a pressure of a pressure medium.

According to the present invention, the control system for a power transmission unit further comprises a heat insulating mechanism, which prevents a heat of the exhaust gas transmitted from the pressure transmission mechanism to the pressure chamber from being transmitted to the pressure chamber.

Further, according to the present invention, the power transmission unit includes a continuously variable transmission in which a belt is applied to a primary pulley and a secondary pulley. The primary pulley comprises a first fixed sheave which is not allowed to move in its rotational center axis, and a first movable sheave which is allowed to move in its rotational center axis. Meanwhile, the secondary pulley comprises a second fixed sheave which is not allowed to move in its rotational center axis, and a second movable sheave which is allowed to move in its rotational center axis. The primary pulley is provided with a primary pressure chamber which is adapted to control a speed change ratio between a rotational speed of the primary pulley and a rotational speed of the secondary pulley continuously by controlling a force applied to the first movable sheave, and the secondary pulley is provided with a secondary pressure chamber which is adapted to control the torque capacity between the primary pulley and the secondary pulley by controlling a force applied to the second movable sheave. The aforementioned power transmitting condition of the power transmission unit includes at least one of the speed change ratio and the torque capacity of the continuously variable transmission, and the aforementioned pressure chamber includes at least one of the primary pressure chamber and the secondary pressure chamber.

Thus, according to the present invention, the thermal energy resulting from burning the fuel in the internal combustion engine is converted into the kinetic energy, and the pressure of the exhaust gas resulting from burning the fuel in the internal combustion engine is transmitted to the pressure chamber. Therefore, the power transmitting condition of the power transmission unit can be controlled by moving the movable member by the pressure in the pressure chamber. For this reason, the energy of the exhaust gas emitted from the internal combustion engine can be utilized efficiently.

In addition to the above-explained advantage, according to the present invention, the pressure of the exhaust gas being transmitted to the pressure chamber can be controlled by the pressure control valve.

In addition to the above-explained advantage, according to the present invention, the pressure of the exhaust gas emitted from the internal combustion engine is reduced by the pressure reducing mechanism on the way from the first conduit to the second conduit. The exhaust gas flowing through the first conduit is flown partially into the third conduit by the pressure difference between the first conduit and the second conduit, and the pressure of the exhaust gas flowing into the third conduit is transmitted to the pressure chamber while being controlled by the pressure control valve.

In addition to the above-explained advantage, according to the present invention, the power outputted form the internal combustion engine is inputted to the power transmission unit.

In addition to the above-explained advantage, according to the present invention, the exhaust gas emitted from the internal combustion engine is purified by the purifying catalyst.

In addition to the above-explained advantage, according to the present invention, the pressure of the exhaust gas can be transmitted to the pressure chamber while being converted into the pressure of the pressure medium.

In addition to the above-explained advantage, according to the present invention, the heat of the exhaust gas can be prevented from being transmitted to the pressure chamber. Therefore, durability of the pressure chamber can be prevented from being degraded.

In addition to the above-explained advantage, according to the present invention, the pressure is transmitted to at least any one of the primary pressure chamber and the secondary pressure chamber to controls at least any one of the speed change ratio and the torque capacity of the continuously variable transmission.

### BRIEF DESCRIPTION OF THE DRAWINGS

Fig. 1 is a view schematically showing the first example of applying the control system for a power transmission unit according to the present invention to a continuously variable transmission of a vehicle.
Fig. 2 is a view schematically shoeing the second example of applying the control system for a power transmission unit according to the present invention to a continuously variable transmission, of a vehicle.
Fig. 3 is a view schematically showing the third example of applying the control system for a power transmission unit According to the present invention to a continuously variable transmission of a vehicle.
Fig. 4 is a view schematically showing the fourth examples of applying the control system for a power transmission unit according to the present invention to a continuously variable transmission of a vehicle.
Fig. 5 is a view schematically showing the fifth example of applying the control system for a power transmission unit according to the present invention to a continuously variable transmission of a vehicle.
Fig. 6 is a view schematically showing the sixth example, of applying the control system for a power transmission unit according to the present invention to a continuously variable transmission of a vehicle.

### BEST MODE FOR CARRYING OUT THE INVENTION

The control system for a power transmission unit according to the present invention is configured to control a pressure in a pressure chamber. More specifically, the control system of the present invention is configured to control a power transmitting condition by transmitting a pressure of exhaust gas of an internal combustion engine to the pressure chamber. For example, according to the present invention, the power transmitting condition includes conditions of: a speed change ratio between rotary members of the power transmission unit; a torque capacity between the rotary members of the power transmission unit; and a rotational direction of one of the rotary members of the power transmission unit with respect to a rotational direction of the other rotary member. Examples of the present invention will be explained hereinafter.

### (First Example)

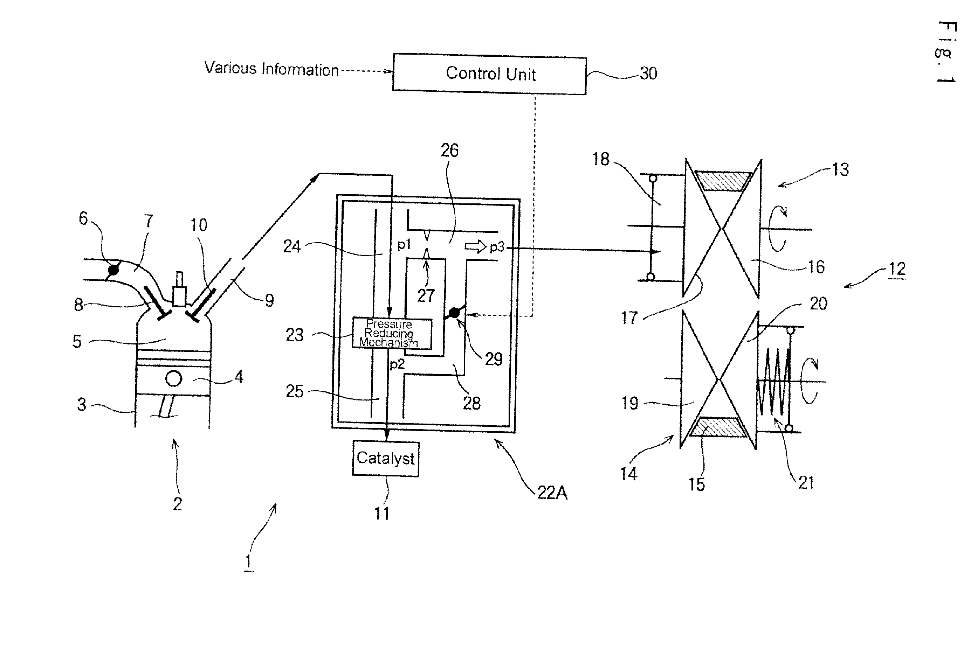

First of all, the first example of applying the control system of the present invention to a continuously variable transmission of a vehicle will be explained with reference to Fig. 1. As shown in Fig. 1. a vehicle 1 is provided with an engine 2. Here, the vehicle 1 includes a passenger vehicle, a truck, a bus and so on. The engine 2 is a prime mover configured to output power by converting thermal energy resulting from burning fuel into kinetic energy. For example, the engine 2 includes a gasoline engine, a diesel engine, an LPG engine and so on. Specifically, the engine, 2 comprises: a piston 4 arranged in a cylinder 3 in a manner to reciprocate within the cylinder 3; a combustion chamber 5, which is formed above a top face of the piston 4, and to which air-fuel mixture is supplied; an inlet pipe 7 which is connected with the combustion chamber 5, and which is provided with an electronic throttle valve 6: a suction valve 8 which opens and closes a port connecting the inlet pipe 7 and the combustion chamber 5; an exhaust pipe 9 for emitting the exhaust gas resulting from burning the fuel in the combustion chamber 5; and an exhaust valve 10 which opens and closes a port connecting the exhaust pipe 9 and the combustion chamber 5. The aforementioned inlet pipe 7 serves as a flow path for introducing the air to the combustion chamber 5, and an amount of the air to be introduced to the combustion chamber 5 through the inlet pipe 7 can be controlled by controlling an opening degree of the electronic throttle valve 6. Meanwhile, the exhaust pipe 9 is connected with an exhaust gas purifying catalyst 11. The exhaust gas purifying catalyst 11 is adapted to purify the exhaust gas by reducing pollutant contained in the exhaust gas, e.g., by reducing carbon monoxide (CO), hydrocarbon (HC), nitrogen oxide (NOx) and so on contained in the exhaust gas.

Although not shown in Fig. 1. the vehicle, 1 comprises drive wheels, and the torque is transmitted to the drive wheels to generate a driving force. According to the first example, the power of the engine 2 is transmitted to the drive wheel, and a continuously variable transmission 12 is arranged on a power transmission route from the engine 2 to the drive wheel. The continuously variable transmission 12 is a belt type continuously variable transmission comprising a primary pulley (i.e., a drive pulley) 13, a secondary pulley (i.e., a driven pulley) 14, and a belt 15 applied to those pulleys 13 and 14. Therefore, the continuously variable transmission 12 is capable of varying a speed change ratio, that is, a ratio between rotational speeds of the primary pulley 13 and secondary pulley 14 continuously (i.e., steplessly).

Specifically, the primary pulley 13 is arranged in a manner to rotate around a rotational axis thereof. As shown in Fig. 1, the primary pulley 13 comprises a fixed sheave 16 which is not allowed to move along the rotational axis and a movable sheave 17 which is allowed to move along the rotational axis, and the aforementioned belt 15 is interposed therebetween. In order to move the moveable sheave 17 along the rotational axis thereof, the movable sheave 17 is provided with a primary pressure chamber 18 which is adapted to generate a thrust force (i.e., a pushing force) for pushing the movable sheave 17 toward the fixed sheave 16. Specifically, the primary pressure chamber 18 is formed into cylindrical shape. According to the example shown in Fig. 1, the pressure of the primary pressure chamber. 18 may be transmitted to the movable sheave 17 not only directly but also indirectly thorough a (not shown) piston.

Meanwhile, the secondary pulley 14 is also arranged in a manner to rotate around a rotational axis thereof. As also shown in Fig. 1, the secondary pulley 14 comprises a fixed sheave 19 which is not allowed to move along the rotational axis and a movable sheave 20 which is allowed to move along the rotational axis, and the aforementioned belt 15 is also interposed therebetween. In order to move the moveable sheave 20 along the rotational axis thereof, the movable sheave 20 is provided with a pushing force generating device 21 which is configured to establish a precompression for pushing the movable sheave 20 toward the fixed sheave 19. Specifically, the pushing force generating device 21 is provided with a compressed spring and a torque cam. The torque cam is adapted to convert a torque of a rotary member into a linear force, and the linear force thus converted is applied to the movable sheave 20 via the compressed spring.

A speed change ratio of the continuously variable transmission 12 thus structured can be controlled by controlling a pressure in the primary pressure chamber 18. For example, in case the pressure in the primary pressure chamber 18 is raised, a groove width of the primary pulley 13 is narrowed, and a running radius of the belt 15 on the primary pulley 13 is thereby increased relatively. In this situation, the movable sheave 20 of the secondary pulley 14 is moved away from the fixed sheave 19 against a pushing force of the pushing force generating device 21. and a running radius of the belt 15 on the secondary pulley 14 is thereby reduced relatively. That is, an upshifting for reducing the speed change ratio of the continuously variable transmission 12 relatively is carried out.

To the contrary, in case the pressure in the primary pressure chamber 18 is lowered, the movable sheave 20 is pushed toward the fixed sheave 19 by the pushing force of the pushing force generating device 21. and a running radius of the belt 15 on the secondary pulley 14 is thereby increased relatively. In this situation, the groove width of the primary pulley 13 is widened, and a running radius of the belt 15 on the primary pulley 13 is thereby reduced relatively. That is, a downshifting for increasing the speed change ratio of the continuously variable transmission 12 relatively is carried out. In addition, the speed change ratio of the continuously variable transmission 12 can be kept to a constant ratio by keeping the pressure in the primary pressure chamber18 to a constant volume thereby keeping the running radii of the belt 15 on the primary pulley 13 and the secondary pulley 14 to constant radii.

In addition, according to the first example, the vehicle 1 is provided with a pressure transmission mechanism 22A for transmitting a high pressure of the exhaust gas emitted from the engine 2 to the primary pressure chamber 18. The pressure transmission mechanism 22A is arranged on a flow passage of the exhaust gas extending from the exhaust pipe 9 to the exhaust gas purifying catalyst 11. A structure of the pressure transmission mechanism 22A will be explained in more detail. Specifically, the pressure transmission mechanism 22A comprises a first conduit 24 connecting the exhaust port with an inlet side (i.e., a primary side) of a pressure reducing mechanism 23. The pressure reducing mechanism 23 comprises a known pressure reducing valve adapted to reduce the pressure of an outlet side of the pressure reducing mechanism 23 to be lower than the pressure of the inlet side. The pressure transmission mechanism 22A further comprises a second conduit 25 connecting the outlet side (i.e., a secondary side) of the pressure reducing mechanism 23 with the exhaust gas purifying catalyst 11. In addition, a branch 26 is branched from the first conduit 24 to be connected with the primary pressure chamber 18.

An orifice 27 is formed on the branch 26. The orifice 27 is configured to reduce a flow rate of the exhaust gas flowing into the branch 26 from the first conduit 24. For this purpose, a cross-sectional area of the orifice 27 is smaller than that of the remaining portion of the branch 26. An intermediate portion of the branch 26 between the orifice 26 and the primary pressure chamber 18 is connected with the second conduit 25 through a bypass 28. Therefore, the pressure in the branch 26 is discharged to the second conduit 25 via the bypass 28. In addition, a throttle valve 29 is arranged on the bypass 28. Specifically, the throttle valve 29 is a pressure control valve for controlling the pressure in the branch 26 by controlling a cross-sectional area of the bypass 28, and for example, a butterfly valve can be used as the throttle valve 29. Therefore, pressures in the first conduit 24 and the second conduit 25 are differentiated by controlling an opening degree of the throttle valve 29, and the pressure in the branch 26 is discharged to the second conduit 25 by the difference between the pressures in the first conduit 24 and the second conduit 25. Thus, the exhaust gas passes through the first conduit 24, the second conduit 25, the branch 26 and the bypass 28. Therefore, a heat-resistant durable metal pipe is used to form those conduits.

In order to control the engine 2 and the continuously variable transmission 12, the vehicle 1 is provided with an electronic control unit 30. Various kinds of information about the vehicle 1, for example, an opening degree of an accelerator, a vehicle speed, a rotational speed of the engine 2, an input speed and an output sped of the continuously variable transmission 12, a signal from a sensor or switch for detecting a pressure in the primary pressure chamber 18 etc. are inputted to the control unit 38. Meanwhile, a signal for controlling an engine torque, a signal for controlling a speed change ratio of the continuously variable transmission 12, a signal for controlling a torque capacity of the continuously variable transmission 12 and so on are outputted from the control unit 30.

Hear will be explained an action and a control of the engine 2. Specifically, the air is sucked into the combustion chamber 5 through the inlet pipe 7. When the air-fuel mixture is burned in the combustion chamber 5, the piston 4 is pushed by an explosion energy resulting from burning the mixture so that a torque is outputted from a crank shaft. The torque of the engine 2 thus outputted is transmitted to a drive wheel through the continuously variable transmission 12. In this situation, exhaust gas generated in the combustion chamber 5 is discharged from the combustion chamber 5 to the first conduit 24 of the pressure transmission mechanism 22A through the exhaust pipe 9. The pressure of the exhaust gas flowing from the first conduit 24 to the second conduit, 25 is reduced by the pressure reducing mechanism 23, and then, the exhaust gas is purified by the purifying catalyst 11 and emitted to the atmosphere.

The control unit 30 is configured to calculate a drive force demanded by the vehicle 1 on the basis of a speed of the vehicle 1 and an opening degree of the accelerator, and then calculate a target output of the engine 2 on the basis of the calculated drive force demanded by the vehicle 1. In order to control an actual output of the engine 2 on the basis of the target output thus calculated, an optimum fuel economy curve is stored in the control unit 30 in advance. Further, in order to control the actual output, of the engine 2 in line with the optimum fuel economy curve, a target rotational speed of the engine 2, and a target torque of the engine 2 are calculated by the control unit 30. Specifically, the actual rotational speed of the engine 2 is approximated to the target engine speed thus calculated by controlling a speed change ratio of the continuously variable transmission 12, and the actual torque of the engine 2 is approximated to the target engine torque thus calculated by controlling an opening degree of an electronic throttle valve 6, an amount of fuel injection and so on.

Here will be explained the above-mentioned control of a speed change ratio of the continuously variable transmission 12 in more detail. As described, the pressure reducing mechanism 23 is arranged between the first conduit 24 and the second conduit 25, therefore, the pressure p2 in the second conduit 25 is lower than the pressure p 1 in the first conduit 24. For this reason, the exhaust gas flowing through the first conduit 24 is partially inflown into the branch 26 through the orifice 27 by the pressure difference. The flow rate of the exhaust gas is lowered when passing though the orifice 27, and the (static) pressure of the exhaust gas in the branch 26 is transmitted to the primary pressure chamber 18. When the throttle valve 29 is opened, the pressure of the exhaust gas in the branch 26 is released into the second conduit 25 via the bypass 28. Therefore, the pressure of the exhaust gas transmitted from the branch 26 to the primary pressure chamber 18 can be controlled by controlling an opening degree of the throttle valve 29.

Specifically, in case of narrowing the opening degree of the throttle valve 29 relatively, the pressure in the primary pressure chamber 18 is raised. When the pressure in the primary pressure chamber 18 is thus raised, the movable sheave 17 is pushed toward the fixed sheave 16 and the speed change ratio of the continuously variable transmission 12 is reduced relatively. That is, the upshifting is carried out. To the contrary, in case of widening the opening degree of the throttle valve 29 relatively, the pressure in the primary pressure chamber 18 is lowered. When the pressure in the primary pressure chamber 18 is thus lowered, the movable sheave 20 of the secondary pulley 14 is pushed toward the fixed sheave 19 by the compressed spring of the pushing force generating device 21. As a result, the speed change ratio of the continuously variable transmission 12 is increased relatively. That is, the downshifting is carried out. In addition, the speed change ratio of the continuously variable transmission 12 can be kept to a constant ratio by keeping the pressure in the primary pressure chamber 18 to a constant pressure. Thus, the pressure transmission mechanism 22A is capable of controlling the pressure of the exhaust gas in the branch 26.

In addition, the torque capacity of the continuously variable transmission 12 can be controlled by controlling the pushing force applied to the movable sheave 20 of the secondary pulley 14 from the pushing force generating device 21. For example, in case the torque inputted to the continuously variable transmission 12 from the engine 2 is increased, the torque capacity is increased by increasing the pushing force applied to the movable sheave 20 of the secondary pulley 14 from the pushing force generating device 21. To the contrary, in case the torque inputted to the continuously variable transmission 12 form the engine 2 is reduced, the torque capacity is reduced by reducing the pushing force applied to the movable sheave 20 of the secondary pulley 14 from the pushing force generating device 21. Additionally, in case the torque inputted to the continuously variable transmission 12 form the engine 2 is constant, the torque capacity is kept to a constant capacity by keeping the pushing force applied to the movable sheave 20 of the secondary pulley 14 from the pushing force generating device 21 to a constant force.

Thus, according to the first example, the speed change ratio of the continuously variable transmission 12 can be controlled by transmitting the energy of the exhaust gas resulting from burning the fuel, that is, pressure of the exhaust gas to the primary pressure chamber 18 while adjusting the pressure in the primary pressure chamber 18. Therefore, it is unnecessary to arrange a dedicated hydraulic sauce such as a hydraulic pump which may cause a significant leakage loss for the purpose of applying the pressure to the primary pressure chamber 18. Moreover, since the power of the engine 2 will not be consumed to drive the hydraulic pump, fuel economy can be improved. In addition, a bearing for holding a rotary member of the hydraulic pump is not arranged in the pressure transmission mechanism 22A. Therefore, power loss of the engine 2 can be reduced. Further, since the hydraulic pump is not used, it is unnecessary to arrange a valve body to form an oil passage to the primary pressure chamber 18. Therefore, the continuously variable transmission 12 can be downsized. Furthermore, the pressure, transmission mechanism 22A is configured to control the pressure in the primary pressure chamber 18 utilizing the pressure difference between the first conduit 24 and the second conduit 25. Therefore, the exhaust gas flowing through the flow path including the exhaust pipe 9 will not be hindered. For this reason, a back pressure of the engine 2, that is, an exhausting resistance will not be increased.

### (Second Example)

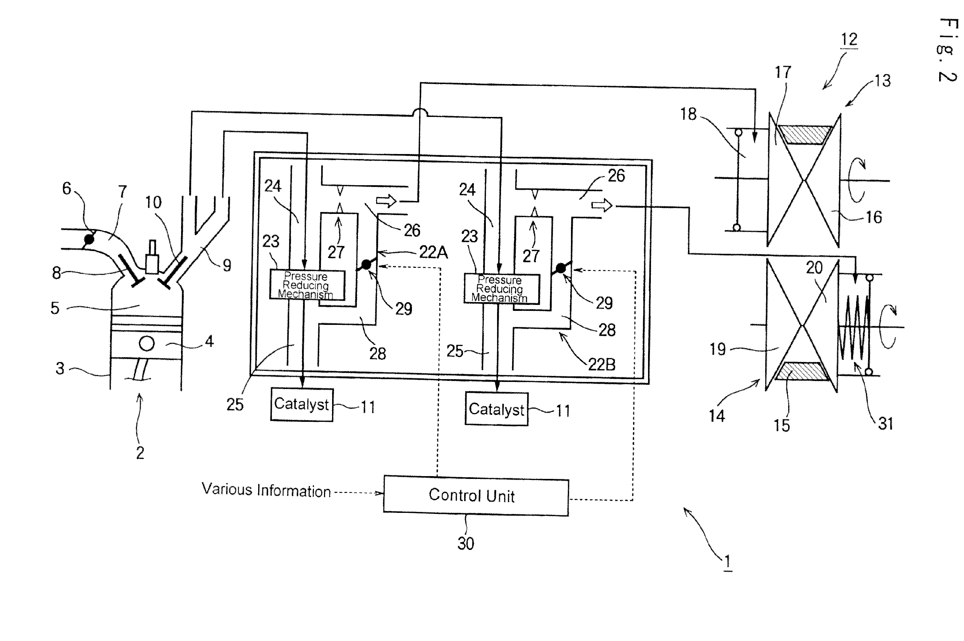

Next, second example of the control system for a power transmission unit according to the present invention will be explained with reference to Fig. 2. According to the second example, the configuration of the continuously variable transmission 12 is partially different from that of the first example. Specifically, according to the second example, a secondary pressure chamber 31 is arranged instead of the pushing force generating device 21 of the first example. The secondary pressure chamber 31 is also configured to apply a pushing force to the movable sheave 20 toward the fixed sheave 19. As shown in Fig. 2, the secondary pressure chamber 31 is provided with a spring for applying a precompresion to the movable sheave 20. Therefore, the pressure in the secondary pressure chamber 31 is applied to the movable sheave 20 together with the spring force thereby pushing the movable sheave 20 toward the fixed sheave 19 (that is, generating clamping force).

Moreover, according to the second example, a pressure transmission mechanism 22B is arranged to control the pressure in the secondary pressure chamber 31, in addition to the pressure transmission mechanism 22A structured as explained in the first example. Specifically, the pressure transmission mechanisms 22B is configured to transmit the pressure of the exhaust gas emitted from the engine 2 to the secondary pressure chamber 31, and to control the pressure transmitted to the secondary pressure chamber 31. A configuration of the pressure transmission mechanism 22B is identical to that of the pressure transmission mechanism 22A explained in the first example. Therefore, according to the second example, the exhaust pipe 9 is branched into two-ways. Specifically, one of the branches of exhaust pipe 9 is connected with the first conduit 24 of the pressure transmission mechanism 22A, and the other branch of exhaust pipe 9 is connected with the first conduit 24 of the pressure transmission mechanism 22B. Meanwhile, a branch 26 of the pressure transmission mechanism 22B is connected with the secondary pressure chamber 31. In addition, as shown in Fig. 2, the second conduit 25 of the pressure transmission mechanism 22A is connected with the purifying catalyst 11, and the second conduit 25 of the pressure transmission mechanism 22B is connected with another purifying catalyst 11. However, both of the second conduits 25 of the pressure transmission mechanisms 22A and 22B may also be connected with the common purifying catalyst 11.

As the first example, the speed change ratio of the continuously variable transmission 12 is also controlled by the pressure transmission mechanism 22A. Meanwhile, according to the second example, the torque capacity of the continuously variable transmission 12 can be controlled by the pressure transmission mechanism 22B. Specifically, in case of narrowing the opening degree of the throttle valve 29 of the pressure transmission mechanism 22B relatively, the pressure in the branch 26 of the pressure transmission mechanism 22B is raised by the same action as that of the pressure transmission mechanism 22A of the first example, and as a result, the pressure in the secondary pressure chamber 31 is raised. To the contrary, in case of widening the opening degree of the throttle valve 29 of the pressure transmission mechanism 22B relatively, the pressure in the branch 26 of the pressure transmission mechanism 22B is lowered by the same action as that of the pressure transmission mechanism 22A of the first example, and as a result, the pressure in the secondary pressure chamber 31 is lowered. In addition, the pressure in the secondary pressure chamber 31 can be kept to a constant pressure by controlling the opening degree of the throttle valve 29. Therefore, the advantages of the first example can also be achieved by the second example.

### (Third Example)

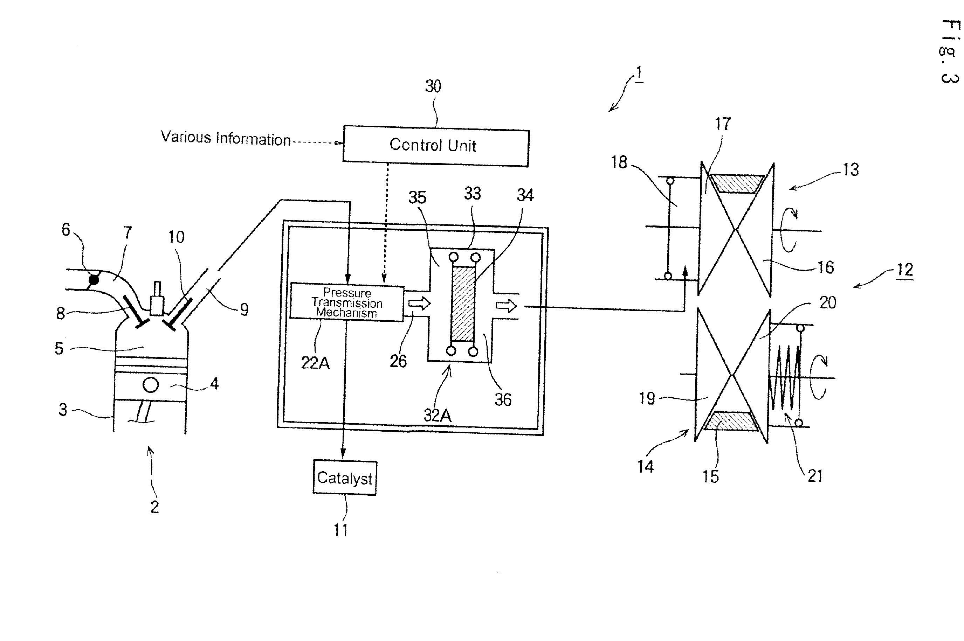

Next, third example of the control system for a power transmission unit according to the present invention will be explained with reference to Fig. 3. According to the third example, configurations of the engine 2, the continuously variable transmission 12 and the pressure transmission mechanism 22A are identical to those of the first example. Therefore, reference numerals in common with those of the first example are allotted to the common elements. Since the configuration of the pressure transmission mechanism 22A is thus identical to that in the first example, details of the structure of the pressure transmission mechanism 22A is not shown in Fig. 3. In addition, as the first example, the pressure in the primary pressure chamber 18 can also be controlled by transmitting the pressure of the exhaust gas thereto.

Specifically, unlike the first example, a pressure conversion mechanism 32A is arranged between the pressure transmission mechanism 22A and the primary pressure chamber 18. The pressure conversion mechanism 32A is configured to convert the pressure of the exhaust gas into a pressure of another kind of fluid, and to transmit the converted pressure to the primary pressure chamber 18. For this purpose, the pressure conversion mechanism 32A is provided with a hollow casing 33, and a piston 34 arranged in the casing 33 while being allowed to reciprocate in a predetermined direction. Therefore, an internal space of the casing 33 is divided by the piston 34 into a first fluid chamber 35 and a second fluid chamber 36. Specifically, the first fluid chamber 35 is connected with the branch 26 of the pressure transmission mechanism 22A so that the pressure of the exhaust gas is transmitted to the first fluid chamber 35, and the piston 34 is configured to transmit the pressure of the first fluid chamber 35 to the second fluid chamber 36.

Meanwhile, the second fluid chamber 36 is connected with the primary pressure chamber 18, and a pressure medium different from the exhaust gas is encapsulated from the second fluid chamber 36 to the primary pressure chamber 18 to mediate the pressure transmitted therebetween. Specifically, constituent of the pressure medium is different from that of the exhaust gas, and a temperature of the pressure medium is lower than that of the exhaust gas. In addition, both non-compressible fluid and compressible fluid can be used as the pressure medium, however, it is preferable to use non-compressible fluid such as oil. A contact face between an outer circumferential face of the piston 34 and the casing 33 is sealed by a sealing device, and in order to prevent heat transfer of the exhaust gas in the first fluid chamber 35 to the pressure medium in the second fluid chamber 36, the piston 34 is made of heat insulating material partially or entirely. Specifically, a resin member, a metal case member containing galled material, glass fiber (i.e., glass wool) and so on may be used as the heat insulating material. The remaining structures of the third example are identical to those of the first example.

According to the third example, the pressure transmission mechanism 22A also functions as that of the first example. Therefore, the exhaust gas flowing through the branch 26 of the pressure transmission mechanism 22A flows into the first fluid chamber 35 of the pressure conversion mechanism 32A. Then, the pressure in the first fluid chamber 35 is transmitted to the pressure medium in the second fluid chamber 36 through the piston 34, and further transmitted to the primary pressure chamber 18. For example, in case the pressure in the first fluid chamber 35 is raised, the piston 34 is moved the right side in Fig. 3, and the pressure in the second fluid chamber 36 is thereby raised. The pressure in the second fluid chamber 36 thus raised is transmitted to the primary pressure chamber 18, and the pressure in the primary pressure chamber 18 is thereby raised. As a result, the running radius of the belt 15 on the primary pulley 13 is thereby increased relatively. That is, an upshifting is carried out. To the contrary, in case the pressure in the first fluid chamber 35 is lowered, the movable sheave 20 of the secondary pulley 14 is pushed toward the fixed sheave 19 by the compressed spring of the pushing force generating device 21. As a result, the running radius of the belt 15 on the primary pulley 13 is thereby reduced relatively. That is, a downshifting is carried out. In this situation, the movable sheave 17 of the primary pulley 13 is moved away from the fixed sheave 16, and the pressure in the primary pressure chamber 18 is thereby raised. The pressure in the primary pressure chamber 18 thus raised is transmitted to the second fluid chamber 36, and the piston 34 is thereby moved toward the left side in Fig. 3. The speed change ratio of the continuously variable transmission 12 is thus controlled. The advantages of the first example can also be achieved by the remaining configurations of the third example in common with those of the first example.

As described, according to the third example, the piston 34 arranged in the pressure conversion mechanism 32A is made of the heat insulating material, therefore, the heat of the exhaust gas is insulated by the piston 34. For this reason, the heat of the exhaust gas will not be transferred to the pressure medium in the second fluid chamber 36 and the primary pulley 13. In addition, durability of the primary pulley 13 and the belt 15 will not be degraded. Here, in case of using the compressible fluid, e.g., air as the pressure medium, an air pressure in the second fluid chamber 36 is difficult to be raised even if the pressure in the first fluid chamber 35 is raised. In this case, however, the pressure in the second fluid chamber 36 may be controlled by controlling an opening degree of the throttle valve 29 taking into consideration changing characteristics of the air pressure.

### (Fourth Example)

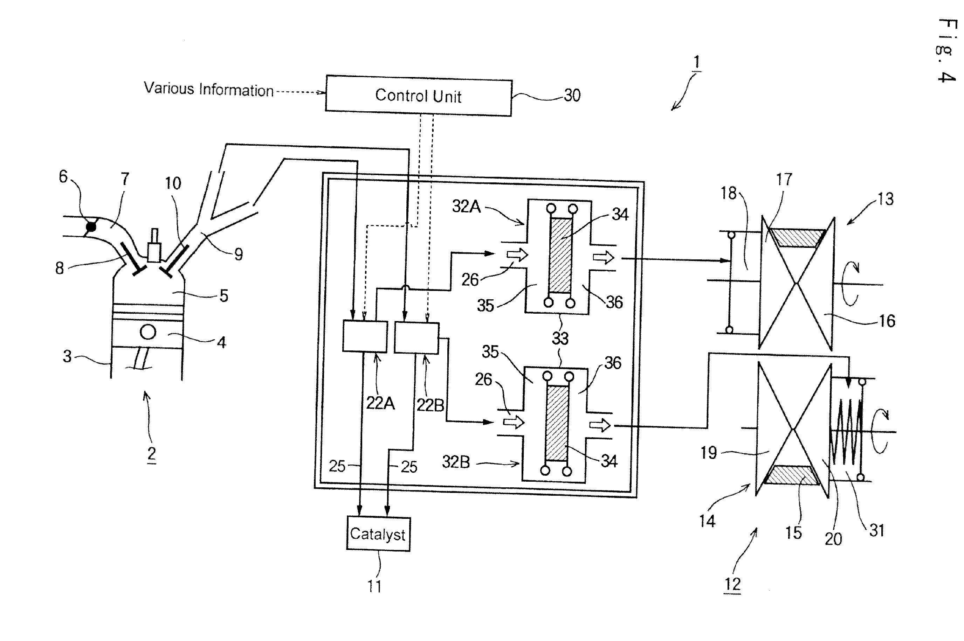

Next, fourth example of the control system for a power transmission unit according to the present invention will be explained with reference to Fig. 4. In the fourth example, reference numerals in common with those of the second and the third example are allotted to the common elements. According to the fourth example, likewise the second example, the continuously variable transmission 12 is provided with the secondary pressure chamber 31 to control the torque capacity thereof. Moreover, likewise the third example, the pressure transmission mechanism 22A and the pressure conversion mechanism 32A are arranged in the fourth example. Further, likewise the second example, the pressure transmission mechanism 22B is arranged in the fourth example to transmit the pressure of the exhaust gas to the secondary pressure chamber 31. In addition, in order to convert the pressure of the pressure transmission mechanism 22B into a pressure of the pressure medium different from the exhaust gas, a pressure conversion mechanism 32B is arranged in the fourth example. A fundamental structure of the pressure conversion mechanism 32B is identical to that of the pressure conversion mechanism 32A. Specifically, the first fluid chamber 35 of the pressure conversion mechanism 32B is connected with the branch 26 of the pressure transmission mechanism 22B, and the second fluid chamber 36 of the pressure conversion mechanism 32B is connected with the secondary pressure chamber 31. As shown in Fig. 4, both second conduits 25 of the pressure transmission mechanism 22A and 22B are connected with the common purifying catalyst 11.

According to the fourth example, the pressure transmission mechanism 22A and the pressure conversion mechanism 32A function as those in the third example thereby achieving same advantages as the third example. Also, the pressure transmission mechanism 22B of the fourth example functions as the pressure transmission mechanism 22A of the third example. Specifically, according to the fourth example, the pressure of the exhaust gas flowing through the branch 26 of the pressure transmission mechanism 22B is transmitted to the first fluid chamber 35 of the pressure conversion mechanism 32B. In case the pressure in the first fluid chamber 35 is raised by controlling the pressure of the exhaust gas by the pressure transmission mechanism 22B, the pushing force applied to the piston 34 of the pressure conversion mechanism 32B is increased, and the pressure transmitted from the second fluid chamber 36 to the secondary pressure chamber 31 is thereby raised. As a result, the pressure of the secondary pulley 14 to clamp the belt 15 is raised, and the torque capacity of the continuously variable transmission. 12 is thereby increased.

To the contrary, in case the pressure in the first fluid chamber 35 is lowered by controlling the pressure of the exhaust gas by the pressure transmission mechanism 22B, the pushing force applied to the piston 34 of the pressure conversion mechanism 32B is reduced, and the pressure transmitted from the second fluid chamber 36 to the secondary pressure chamber 31 is thereby lowered. As a result, the pressure of the secondary pulley 14 to clamp the belt 15 is lowered, and the torque capacity of the continuously variable transmission 12 is thereby reduce. In addition, in case of keeping the pressure in the first fluid chamber 35 to the constant pressure, the pushing force applied to the piston 34 of the pressure conversion mechanism 32B is kept constant, and the pressure transmitted from the second fluid chamber 36 to the secondary pressure chamber 31 is thereby kept constant. As a result, the pressure of the secondary pulley 14 to clamp the belt 15 is kept to the constant pressure, and the torque capacity of the continuously variable transmission 12 is thereby kept constant. In addition, according to the fourth example, both of the pistons 34 of the pressure conversion mechanisms 32A and 32B are made of the heat insulating material. Therefore, the heat of the exhaust gas will not be transferred to the fluid in the second fluid chamber 36, and to the primary pulley 13 and the secondary pulley 14. In addition, durability of the continuously variable transmission 12 is prevented from being degraded.

### (Fifth Example)

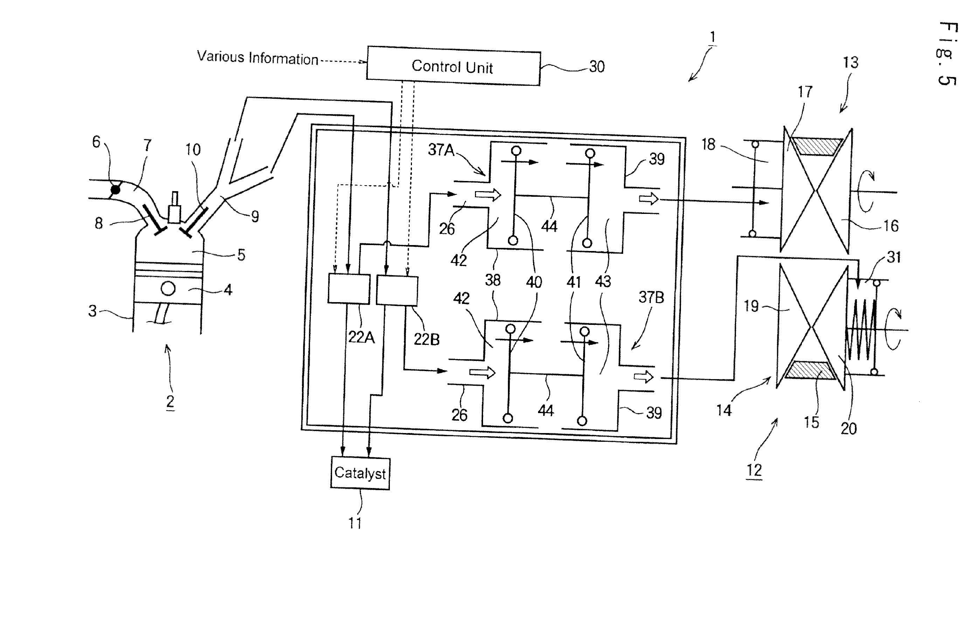

Next, fifth example of the control system for a power transmission unit according to the present invention will be explained with reference to Fig. 5. According to the fifth example, configurations of the engine 2, the continuously variable transmission 12 and the pressure transmission mechanisms 22A and 22B are identical to those of the fourth example. Therefore, reference numerals in common with those of the fourth example are allotted to the common elements. According to the fifth example, specifically, a configuration of the pressure conversion mechanism for transmitting the pressure of the exhaust gas to the primary pressure chamber 18, and a configuration of the pressure conversion mechanism for transmitting the pressure of the exhaust gas to the secondary pressure chamber 31 are different from those of the fourth example. The configuration, of the pressure conversion mechanism according to the fifth example will be explained hereinafter.

First of all, a pressure conversion mechanism 37A for transmitting the pressure of the exhaust gas to the primary pressure chamber 18 will be explained. The pressure conversion mechanism 37A comprises cylinders 38 and 39. Those cylinders 38 and 39 are arranged coaxially without, contacting to each other, and inner diameters of those cylinders 38 and 39 are identical to each other. In addition, a piston 40 is arrange in the cylinder 38 while being contacted with an inner circumferential face of the cylinder 38, in a manner to reciprocate along an axial direction of the cylinder 38. Also, a piston 41 is arranged in the cylinder 39 while being contacted with an inner circumferential face of the cylinder 39, in a manner to reciprocate along an axial direction of the cylinder 39. Those pistons 40 and 41 are connected through a shaft 44 to reciprocate integrally. Since the pistons 40 and 41 are thus connected through the shaft 44, the pressure in the first fluid chamber 42 is transmitted to the second fluid chamber 43 through the piston 40, the shaft 44 and the piston 41. Those pistons 40 and 41, and shaft 44 are made of material whose heat conductivity is relatively low such as resin and fine ceramics including zirconia.

Therefor, a first fluid chamber 42 is defined in the cylinder 38 by the piston 40, and the first fluid chamber 42 thus formed is connected with the branch 26 of the pressure transmission mechanism 22A. Also, a second fluid chamber 43 is defined in the cylinder 39 by the piston 41. and the second fluid chamber 43 thus formed is connected with the primary pressure chamber 18. In addition, a pressure medium is encapsulated from the second fluid chamber 43 to the primary pressure, chamber 18 entirely. In the pressure conversion mechanism 37A thus structured, the pressure of the exhaust gas in the first fluid chamber 42 is transmitted to the pressure medium in the second fluid chamber 43 through the pistons 40 and 41.

Next, a pressure conversion mechanism 37B for transmitting the pressure of the exhaust gas to the secondary pressure chamber 31 will be explained hereinafter. A fundamental structure of the pressure conversion mechanism 37B is identical to that of the pressure conversion mechanism 37A. Specifically, the first fluid chamber 42 of the pressure conversion mechanism 37B is connected with the branch 26 of the pressure transmission, mechanism 22B, and the second fluid chamber 43 is connected with the secondary pressure chamber 31. In the pressure conversion mechanism 37B thus structured, the pressure of the exhaust gas in the first fluid chamber 42 is also transmitted to the pressure medium in the second fluid chamber 43 through the pistons 40 and 41. As shown in Fig. 5, both of the pressure transmission mechanisms 22A and 22B are connected with the common purifying catalyst 11.

According to the fifth example, the pressure of the exhaust gas in the branch 26 of the pressure transmission mechanism 22A is controller by the same principle as the fourth example, and the pressure of the exhaust gas thus controlled is transmitted to the first fluid chamber 42 of the pressure conversion mechanism 37A. The pressure thus transmitted to the first fluid chamber 42 is further transmitted to the second fluid chamber 43 through the pistons 40 and 41. For example, in case the pressure in the second fluid chamber 43 is raised, the pressure thus raised is transmitted to the primary pressure chamber 18 to move the movable sheave 17 toward the fixed sheave 16. As a result, the speed change ratio of the continuously variable transmission 12 is reduced relatively, that is, an upshifting is carried out. To the contrary, in case the pressure in the second fluid chamber 43 is lowered, the movable sheave 20 of the secondary pulley 14 is moved toward the fixed sheave 19. As a result, the running radius of the belt 15 on the primary pulley 13 is reduced relatively, that is, a downshifting is carried out. In this situation, the movable sheave 17 of the primary pulley 13 is moved away from the fixed sheave 16, and the pressure in the primary pressure chamber 18 is thereby raised. The pressure in the primary pressure chamber 18 thus raised is transmitted to the second fluid chamber 43, and the pistons 40 and 41 are thereby moved toward the left side in Fig. 5. The speed change ratio of the continuously variable transmission 12 is thus controlled. Meanwhile, according to the fifth example, the pressure of the exhaust gas in the branch 26 of the pressure transmission mechanism 22B is also controlled by the same principle as the fourth example, and the pressure of the exhaust gas thus controlled is transmitted to the first fluid chamber 42 of the pressure conversion mechanism 37B. The pressure thus transmitted to the first fluid chamber. 42 is further transmitted to the second fluid chamber 43 through the pistons 40 and 41. The pressure in the secondary pressure chamber 31 is thus controlled thereby controlling the torque capacity of the continuously variable transmission 12.

As described, according to the fifth example, the pistons 40 and 41, and shafts 44 of the pressure conversion mechanisms 37A and 37B are made of material whose heat conductivity is relatively low. In addition, the cylinder 38 and the cylinder 39 are not contacted to each other. Therefore, the heat of the exhaust gas in the first fluid chamber 42 will not be transferred to the continuously variable transmission 12 via the second fluid chamber 43. For this reason, durability of the primary pulley 13, the secondary pulley 14 and the belt 15 will not be degraded. Additionally, the fifth example may be modified to flow cooling air or cooling water between the cylinders 38 and 39. In this case, the heat of the exhaust gas in the first fluid chamber 42 is transferred to the cooling air or the cooling water, and a temperature of the exhaust gas in the first fluid chamber 42 is thereby lowered. Therefore, a temperature rise in the second fluid chamber 43 can be prevented certainly.

### (Sixth Example)

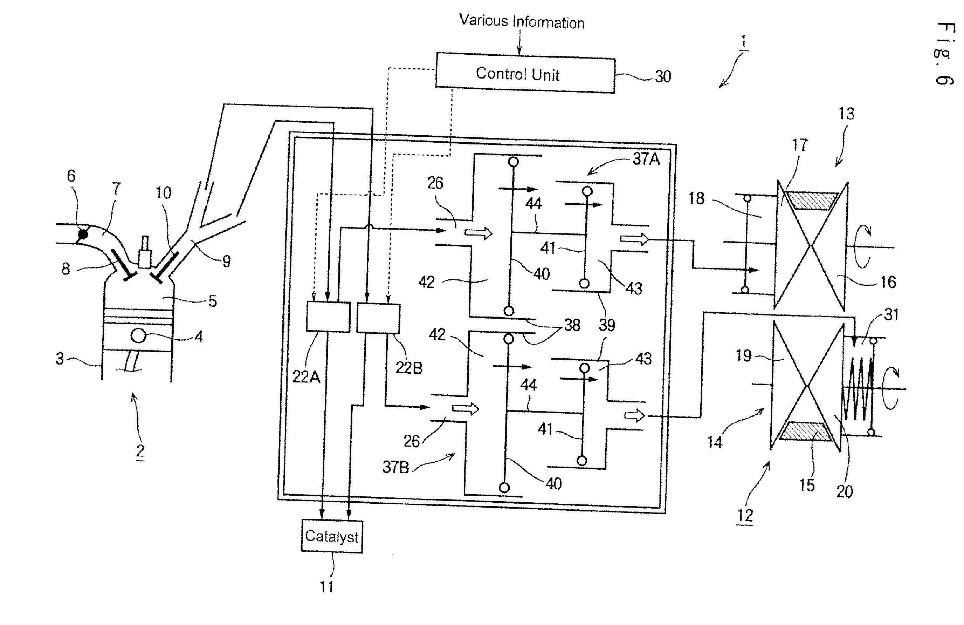

Next, sixth example of the control system for a power transmission unit according to the present invention will be explained with reference to Fig. 6. According to the sixth example, configurations of the engine 2, the pressure transmission mechanisms 22A and 22B and the continuously variable transmission 12 are identical to those of the fifth example. Therefore, reference numerals in common with those of the fifth example are allotted to the common elements. As shown in Fig. 6, the pressure conversion mechanisms 37A and 37B are also arranged in the sixth example, however, according to the sixth example, configurations of the pressure conversion mechanisms 37A and 37B are different from those of the fifth example. Specifically, in the pressure conversion mechanism 37A, a pressure receiving area of the piston 40 is wider than that of the piston 41. Likewise, in the pressure conversion mechanism 37B, a pressure receiving area of the piston 40 is also wider than that of the piston 41. However, according to the sixth example, functions of the pressure transmission mechanisms 22A and 22B are identical to those of the fifth example.

As described, in the pressure conversion mechanism 37A, the pressure receiving area of the piston 40 is widen than that of the piston 41. Here the thrust force applied to the piston is governed by the relation as expressed in the following:
Thrust force applied to the piston = pressure in the fluid chamber pressure receiving area.
Therefore, when the pressure of the first fluid chamber 42 is transmitted to the second fluid chamber 43 through the pistons 40 and 41, the pressure in the second fluid chamber 43 is boosted to be higher than the pressure in the first fluid chamber 42. Likewise, in the pressure conversion mechanism 37B, the pressure in the second fluid chamber 43 is boosted to be higher than the pressure in the first fluid chamber 42 when the pressure of the first fluid chamber 42 is transmitted to the second fluid chamber 43. In addition, the sixth example may also be modified to flow the cooling air or the cooling water the cylinders 38 and 39. In this case, the same advantage as the fifth example can be achieved.

Here will be explained a corresponding relation between the examples and the present invention. The engine 2 corresponds to the internal combustion engine of the present invention; the continuously variable transmission 12 corresponds to the power transmission unit and to the continuously variable transmission of the present invention; the movable shaves 17 and 20 correspond to the movable member of the present invention; the fixed sheave 19 corresponds to the second fixed sheave of the present invention; the movable sheave 20 corresponds to the second movable sheave of the present invention; the fixed sheave 16 corresponds to the first fixed sheave of the present invention; the movable sheave 17 corresponds to the first movable sheave of the present invention; the primary pressure chamber 18 and the secondary pressure chamber 31 correspond to the pressure chamber of the present invention; the primary pressure chamber 18 corresponds to the primary pressure chamber of the present invention; the secondary pressure chamber 21 corresponds to the secondary pressure chamber of the present invention; the pressure transmission mechanisms 22A and 22B correspond to the pressure transmission mechanism of the present invention; and the throttle valve 29 corresponds to the pressure control valve of the present invention.

In addition, the first conduit 24 corresponds to the first conduit of the present invention; the second conduit 25 corresponds to the second conduit of the present invention; the pressure reducing mechanism 23 corresponds to the pressure reducing mechanism of the present invention; the branch 26 corresponds to the third conduit, of the present invention; the purifying catalyst 11 corresponds to the purifying catalyst of the present invention; the primary pulley 13 corresponds to the primary pulley of the present invention; the secondary pulley 14 corresponds to the secondary pulley of the present invention; the belt 15 corresponds to the belt of the present invention; the pressure transmission mechanisms 22A and 22B correspond to the pressure transmission mechanism of the present invention; the pressure conversion mechanisms 32A, 32B, 37A and 37B correspond to the pressure conversion mechanism of the present invention: the oil or the air encapsulated from the second fluid chamber 36 to the secondary pressure chamber 31 corresponds to the pressure medium of the present invention; and the pistons 34, 40 and 41, the shaft 44, and the cylinders 38 and 39 correspond to the heat insulating mechanism of the present invention.

In addition, the second example may be modified to control only the pressure in the secondary pressure chamber 31 by the aforementioned pressure transmission mechanism. Also, the fourth, the fifth and the sixth examples may be modified to control only any one of the pressures in the primary pressure chamber 18 and the secondary pressure chamber 31 by the pressure transmission mechanism. The above-explained examples are thus configured to transmit the power of the internal combustion engine to the continuously variable transmission. However, the present invention may also be applied to a vehicle, which has a prime mover generating a power by the principle different from the internal combustion engine, and in which the power of the prime move thus configured is transmitted to the continuously variable transmission. In this case, the internal combustion engine will not be connected with the continuously variable transmission in a power transmittable manner. For example, an electric motor, a flywheel or a hydraulic motor may be used as the aforementioned prime mover generating a power by the principle different from the internal combustion engine.

In addition, the above-explained pressure transmission mechanism and the pressure conversion mechanism may also be used in a control system for controlling a speed change ratio and a torque capacity of a continuously variable transmission other than the belt-type such a toroidal type continuously variable transmission. Specifically, the toroidal type continuously variable transmission comprises: an input disc; an output disc; a power roller interposed between the input and output discs; a trunnion for controlling a speed change ratio by controlling a tilt angle of the power roller; and a pressurizing device for controlling a torque capacity by applying a clumping pressure to the input disc and the output disc. The toroidal type continuously variable transmission further comprises a pressure chamber for reciprocating the trunnion linearly, and the pressure chamber may be connected with the branch 26 of the pressure transmission mechanism 22B. In case the examples having the pressure conversion mechanisms 32A and 32B, the second fluid chamber 36 of the pressure conversion mechanism 32B may be connected with the pressure chamber controlling a movement, of the trunnion, and the second fluid chamber 36 of the pressure conversion mechanism 32A may be connected with the pressure chamber of the pressurizing device.

Moreover, the above-explained pressure transmission mechanism and the pressure conversion mechanism may also be used in a control system for controlling a power transmission unit other than the continuously variable transmission, e.g., in a control system for controlling a forward/backward switching mechanism. Specifically, the forward/backward switching mechanism is used in a vehicle having a continuously variable transmission, and the forward/backward switching mechanism is connected in series with the continuously variable transmission on a route from a prime mover to a drive wheel. In this case, e.g., a planetary gear type forward/backward switching mechanism comprising a planetary gear mechanism, a clutch for connecting rotary elements of the planetary gear mechanism, and a brake for controlling a rotation of the rotary element may be used in the vehicle. The planetary gear type forward/backward switching mechanism further comprises a pressure chamber for engaging and disengaging the clutch, and a pressure chamber for engaging and disengaging the brake. The planetary gear type forward/backward switching mechanism thus structured is capable of switching a rotational direction of an output member with respect to a rotational direction of an input member between a forward direction and a backward direction, by engaging and disengaging the clutch and the brake. The rotational direction of the output member with respect to the rotational direction of the input member corresponds to the "power transmitting condition" of the present invention. In this case, in order to control the pressure in the pressure chamber for controlling the clutch or in the pressure chamber for controlling the brake, the pressure transmission mechanism or the pressure conversion mechanism may be connected with at least one of the pressure chamber for controlling the clutch and the pressure chamber for controlling the brake.

Further, the above-explained pressure transmission mechanism and the pressure conversion mechanism may also be used in a control system for controlling a transmission other than the continuously variable transmission such as a geared transmission. For example, the geared transmission is arranged on a route from a prime mover of a vehicle to a drive wheel, and the geared transmission includes a planetary gear type geared transmission. Specifically, the planetary gear type geared transmission comprises: a planetary gear mechanism; a clutch for connecting and disconnecting rotary elements of the planetary gear mechanism; and a brake for halting and releasing the rotary element of the planetary gear mechanism. The planetary gear type geared transmission thus structured is configured to change a speed change ratio thereof stepwise (discontinuously) by engaging and disengaging the clutch and brake. The planetary gear type geared transmission further comprises a pressure chamber for engaging and disengaging the clutch, and a pressure chamber for engaging and disengaging the brake. In order to control the pressure in the pressure chamber for controlling the clutch or in the pressure chamber for controlling the brake, the pressure transmission mechanism or the pressure conversion mechanism may be connected with at least one of the pressure chamber for controlling the clutch and the pressure chamber for controlling the brake. Lastly, in the examples as thus far explained, the present invention is applied to the vehicle. However, the present invention may also be applied to machine tools, construction machineries and so on.

## Claims

1. A control system for a power transmission, unit, which has a power transmission, unit to which a power is inputted, a movable member arranged in a movable manner to control a power transmitting condition of the power transmission unit, and a pressure chamber to which a pressure is transmitted to generate a force to be applied to the movable member, **characterized by** comprising:
an internal combustion engine, which is adapted to output power by converting thermal energy resulting from burning fuel into kinetic energy; and
a pressure transmission mechanism, which is adapted to transmit a pressure of exhaust gas resulting from burning the fuel in the internal combustion engine to the pressure chamber.

2. The control system for a power transmission unit as claimed in claim 1, wherein:
the pressure transmission mechanism comprises a pressure control valve which controls the pressure of the exhaust gas transmitted to the pressure chamber.

3. The control system for a power transmission unit as claimed in claim 1, wherein:
the pressure transmission mechanism comprises
a first conduit arranged in a relatively upstream side in a flowing direction of the exhaust gas;
a second conduit arranged in a downstream side of the first conduit in the flowing direction of the exhaust gas:
a pressure reducing mechanism, which is arranged between the first conduit and the second conduit, and which is configured to reduce the pressure in the second conduit to be lower than that in the first conduit;
a third conduit, which connects the first conduit and the second conduit while by passing the pressure reducing mechanism, and to which the exhaust gas is inflown by a pressure difference between the first conduit and the second conduit; and
a pressure control valve, which is arranged in the third conduit, and which controls the pressure of the exhaust gas flowing into the third conduit from the first conduit; and
wherein the pressure of the exhaust gas controlled by the pressure control valve is transmitted to the pressure chamber.

4. The control system for a power transmission unit as claimed in any of claims I to 3,
wherein a power outputted from the internal combustion engine is inputted to the power transmission unit.

5. The control system for a power transmission unit as claimed in any of claims 1 to 4, further comprising:
a purifying catalyst, which purifies the exhaust gas emitted from the internal combustion engine, and which is arranged on a flowing route of the exhaust gas; and
wherein the pressure transmission mechanism is arranged between the internal combustion engine and the purifying catalyst on the flowing route of the exhaust gas.

6. The control system for a powder transmission unit as claimed in any of claims 1 to 5, further comprising:
a pressure conversion mechanism, which is configured to transmit the pressure of the exhaust gas from the pressure transmission mechanism to the pressure chamber, while converting the pressure of the exhaust gas into a pressure of a pressure medium.

7. The control system for a power transmission unit as claimed in any of claims 1 to 5, further comprising:
a heat insulating mechanism, which prevents a heat of the exhaust gas transmitted from the pressure transmission mechanism to the pressure chamber from being transmitted to the pressure chamber.

8. The control system for a power transmission unit as claimed in any of claims 1 to 7, wherein:
the power transmission unit includes a continuously variable transmission in which a belt is applied to a primary pulley and a secondary pulley;
the primary pulley comprises a first fixed sheave which is not allowed to move in its rotational center axis, and a first movable sheave which is allowed to move in its rotational center axis:
the secondary pulley comprises a second fixed sheave which is not allowed to move in its rotational center axis, and a second movable sheave which is allowed to move in its rotational center axis;
the primary pulley is provided with a primary pressure chamber, which is adapted to control a speed change ratio between a rotational speed of the primary pulley and a rotational speed of the secondary pulley continuously by controlling a force applied to the first movable sheave;
the secondary pulley is provided with a secondary pressure chamber, which is adapted to control a torque capacity between the primary pulley and the secondary pulley by controlling a force applied to the second movable sheave;
the power transmitting condition of the power transmission unit includes at least one of the speed change ratio and the torque capacity of the continuously variable transmission; and
the pressure chamber includes at least one of the primary pressure chamber and the secondary pressure chamber.
